# EUROPEAN PATENT APPLICATION

(11) **EP 3 477 605 A1**
(43) Date of publication of application: **01.05.2019**
(21) Application number: 18201956.2
(22) Date of filing: 23.10.2018
(51) Int. Cl.: G07D 11/20, G07D 11/50, G07D 11/40

(54) **MEDIUM PROCESSING APPARATUS**

(30) Priority: 24.10.2017 JP 2017205403
(71) Applicant: Glory Ltd., Hyogo 670-8567 (JP)
(72) Inventor: SANDA, Aiko, Hyogo, 670-8567 (JP); KURODA, Takayuki, Himeji-shi, Hyogo 670-8567 (JP); TAKAHASHI, Kenta, Hyogo, 670-8567 (JP)
(74) Representative: Lambsdorff & Lange Patentanwälte Partnerschaft mbB

(57) **Abstract**

A medium processing apparatus is a medium processing apparatus that executes a process for a medium, including: a first operation/display user interface that accepts a first operation pertaining to the process, and displays first information pertaining to a state of the medium processing apparatus; and a second operation/display user interface that accepts a second operation pertaining to the process, and displays second information pertaining to a state of the medium processing apparatus.

## Description

### Technical Field

The present invention relates to a valuable medium processing apparatus that applies various processes to a medium.

### Background Art

Medium processing apparatuses include, for example, a banknote processing apparatus that processes banknotes as media as disclosed in PTL1. The banknote processing apparatus is shared by two operators across the banknote processing apparatus. The banknote processing apparatus only execute one process for banknotes, e.g. a deposit process, at one time. Consequently, the banknote processing apparatus is always occupied by any of the operators for executing the process for banknotes.

The banknote processing apparatus includes an occupying button on each operator side; the occupying button is operated by the operator by pressing the button in order to occupy the banknote processing apparatus. These occupying buttons internally include a lamp. When the operator presses any of the occupying buttons, the lamp in the occupying button pressed by the operator is turned on. The lit state of the lamp presents information about the operator occupying the banknote processing apparatus.

### Citation List

### Patent Literature

PTL1
Japanese Utility Model Application Laid-Open No. 62-146272

### Summary of Invention

### Technical Problem

Unfortunately, such an occupying button cannot provide information other than the occupying information on the banknote processing apparatus. Consequently, the banknote processing apparatus including such an occupying button is not necessarily regarded to be suitable for an actual operation.

The present invention has been made in view of such situations. It is an object of the present invention to provide a medium processing apparatus having high operability.

### Solution to Problem

A medium processing apparatus according to the present invention is a medium processing apparatus that executes a process for a medium, the medium processing apparatus including:
a first operation/display user interface that accepts a first operation pertaining to the process, and displays first information pertaining to a state of the medium processing apparatus; and
a second operation/display user interface that accepts a second operation pertaining to the process, and displays second information pertaining to a state of the medium processing apparatus.

### Advantageous Effects of Invention

The present invention can provide the medium processing apparatus suitable for an actual operation.

### Brief Description of Drawings

FIG. 1 is a perspective view of a banknote processing apparatus according to one embodiment;
FIG. 2A illustrates one example of an operation mode of a first operation/display user interface;
FIG. 2B illustrates another example of the operation mode of the first operation/display user interface;
FIG. 2C illustrates still another example of the operation mode of the first operation/display user interface;
FIG. 3A illustrates one example of a display mode of the first operation/display user interface;
FIG. 3B illustrates another example of the display mode of the first operation/display user interface;
FIG. 3C illustrates still another example of the display mode of the first operation/display user interface; and
FIG. 4 is a perspective view of an upper part of the banknote processing apparatus according to another embodiment.

### Description of Embodiments

Embodiments of the present invention are hereinafter described with reference to the accompanying drawings. In the following description, a banknote processing apparatus that processes banknotes, which are media, is described as a typical example of a medium processing apparatus according to the present invention.

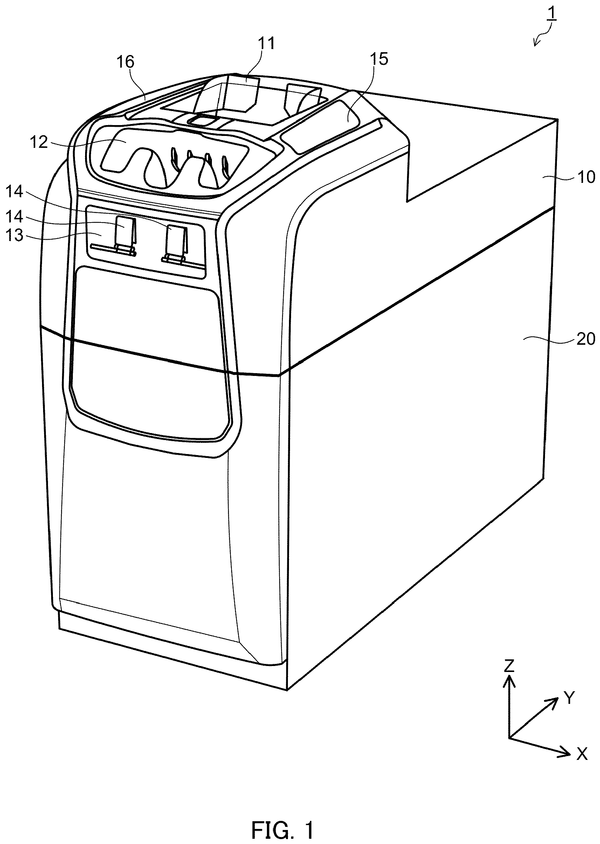

FIG. 1 is a perspective view a banknote processing apparatus 1 according to this embodiment. The banknote processing apparatus 1 according to this embodiment is an apparatus capable of various banknote processes, such as a banknote deposit and dispensation processes. The banknote processing apparatus 1 is installed in a front area of a store, such as a bank, for example.

FIG. 1 illustrates a state where the banknote processing apparatus 1 is disposed on a horizontal plane.

FIG. 1 further illustrates X, Y and Z axes that constitute a right-handed orthogonal coordinate system. The positive direction of the X axis is a direction from a second operation/display user interface 16 to a first operation/display user interface 15, which will be described later. The positive direction of the Z axis is the vertically upward direction. The Y axis is an axis that is orthogonal to the X and Z axes and constitutes a right-handed coordinate system. The YZ plane constituted by the Y and Z axes is a plane parallel to a banknote transport direction by a medium transporter, described later, in particular, the banknote transport direction in proximity to a deposit section 11 and/or a dispensing section 12, described later.

That is, FIG. 1 illustrates the banknote processing apparatus 1 disposed on the horizontal plane in such an orthogonal coordinate system.

In such an orthogonal coordinate system, the front of the banknote processing apparatus 1 is the negative direction of the Y axis. The upward direction of the banknote processing apparatus 1 is the positive direction of the Z axis. The right of the banknote processing apparatus 1 is the positive direction of the X axis. The left of the banknote processing apparatus 1 is the negative direction of the X axis.

The banknote processing apparatus 1 includes a processing section 10 at an upper part, and a storage 20 at a lower part.

The processing section 10 includes a deposit section 11 at an upper and front part of the processing section 10, and at a center part of the processing section 10 in the lateral direction. The deposit section 11 includes a reception hopper that receives banknotes, a banknote feeding mechanism that feeds the banknotes on a reception hopper one by one into the banknote processing apparatus 1, and the like. An inlet is formed at the deposit section 11. An operator mounts banknotes in the deposit section 11 through the inlet.

The processing section 10 includes a dispensing section 12 at the upper part of the processing section 10 and at a front side of the deposit section 11, and at a center part of the processing section 10 in the lateral direction. The dispensing section 12 includes a stacking section on which banknotes are stacked, a stacking wheel that feeds the banknotes one by one onto the stacking section and aligns the banknotes, and the like. An outlet is formed at the dispensing section 12. The operator takes the banknotes from the dispensing section 12 through the outlet.

Instead of at least one of or in addition to the deposit section 11 and the dispensing section 12, an inlet/outlet may be formed, and a deposit/dispensing section having both the functions of the deposit section 11 and the dispensing section 12 may be included, at the processing section 10. In this Specification, the deposit section 11, the dispensing section 12, and the deposit/dispensing section are collectively described as an opening section.

The processing section 10 internally includes a medium transporter, not illustrated. The medium transporter includes rollers, motors and the like, and transports a banknote between the deposit section 11, the dispensing section 12, and other parts in the banknote processing apparatus 1. The transport direction of the banknote by the medium transporter is a direction parallel to the YZ plane. More specifically, the medium transporter transports the input banknote in the direction (a first predetermined direction) where the Y component is positive (i.e., to the back), in proximity to the deposit section 11. In proximity to the dispensing section 12, the medium transporter transports the output banknote in the direction (a second predetermined direction) where the Y component is negative (i.e., to the front).

The processing section 10 internally includes a recognition unit, not illustrated. The recognition unit includes various sensors, is disposed adjacent to the medium transporter, and recognizes the denomination, fitness, authenticity and the like of the banknote transported by the medium transporter.

The processing section 10 internally includes a control section, not illustrated. The control section includes a CPU, a memory and the like. The control section is connected to each of the sections constituting the banknote processing apparatus 1, and controls these sections, thus controlling the banknote processing apparatus 1 integrally. For example, the control section receives information pertaining to a recognition result from the recognition unit, and controls the medium transporter according to the content of the information to switch the banknote transport destination. An information processing apparatus, such as a computer, provided outside of the banknote processing apparatus 1 may communicate with each of the sections constituting the banknote processing apparatus 1, thus replacing the control section.

The processing section 10 includes a rejected banknote ejecting section 13 at the front and below the dispensing section 12. The rejected banknote ejecting section 13 ejects a banknote recognized as a rejected banknote by the recognition unit, from the inside of the banknote processing apparatus 1. Rejected banknotes are banknotes that cannot be treated as objects to be processed in a predetermined process. The rejected banknotes include, for example, counterfeit notes or banknotes having not been correctly recognized by the recognition unit because the banknotes have passed through the recognition unit in a skew state or a stacked state.

The rejected banknote ejecting section 13 includes a rejected banknote stacking section where rejected banknotes are to be stacked, and a rejected banknote stacking wheel that feeds the banknotes one by one onto the rejected banknote stacking section and aligns the banknotes, and the like. The rejected banknote ejecting section 13 further includes a rejected banknote stopper 14 that prevents a rejected banknote from sticking out of the rejected banknote ejecting section 13.

The processing section 10 includes a first operation/display user interface 15 at an upper, front and right part of the processing section 10. In other words, the processing section 10 includes the first operation/display user interface 15 in an area (first zone) disposed to the right (one side) of a plane that is a vertical plane (i.e., a plane parallel to the YZ plane) parallel to the banknote transport direction by the medium transporter and includes the centers of openings included in the deposit section 11, the dispensing section 12 and the rejected banknote ejecting section 13 (at least the centers in the X-axis direction).

The first operation/display user interface 15 has a function of an occupying button. When the first operation/display user interface 15 is touched in a standby state where the banknote processing apparatus 1 is not occupied by any of the operators, the control section switches the display content on the first operation/display user interface 15. For example, the display content on the first operation/display user interface 15 is switched from a standby screen to be displayed during standby time to an operation screen for accepting an operation. The banknote processing apparatus 1 then comes into a state of being occupied by the operator operating the first operation/display user interface 15.

The first operation/display user interface 15 accepts an operation pertaining to a process for a banknote by the banknote processing apparatus 1, and displays information pertaining to the state of the banknote processing apparatus 1. In this Specification, the operator operating the first operation/display user interface 15, an operation to be performed through the first operation/display user interface 15, and information to be displayed on the first operation/display user interface 15 are called a first operator, a first operation, and first information, respectively, as required.

The first operation/display user interface 15 may be, for example, a touch panel.

The processing section 10 includes a second operation/display user interface 16 at an upper, front and left part of the processing section 10. In other words, the processing section 10 includes the second operation/display user interface 16 in an area (second zone) disposed to the left (other side) of a plane that is a vertical plane (i.e., a plane parallel to the YZ plane) parallel to the banknote transport direction by the medium transporter and includes the centers of the openings included in the deposit section 11, the dispensing section 12 and the rejected banknote ejecting section 13 (at least the centers in the X-axis direction). It is a matter of course that the area (first zone) disposed to the right (one side) of the plane that is parallel to the banknote transport direction by the medium transporter and includes the centers of the openings included in the deposit section 11 and the like, and the area (second zone) disposed to the left (other side) of the plane are adjacent to each other via the plane.

The second operation/display user interface 16 has a function of the occupying button. When the second operation/display user interface 16 is touched in a standby state where the banknote processing apparatus 1 is not occupied by any of the operators, the control section switches the display content on the second operation/display user interface 16. For example, the display content on the second operation/display user interface 16 is switched from a standby screen to be displayed during standby time to an operation screen for accepting an operation. The banknote processing apparatus 1 then comes into a state of being occupied by the operator operating the second operation/display user interface 16.

The second operation/display user interface 16 accepts an operation pertaining to a process for a banknote by the banknote processing apparatus 1, and displays information pertaining to the state of the banknote processing apparatus 1. In this Specification, the operator operating the second operation/display user interface 16, an operation to be performed through the second operation/display user interface 16, and information to be displayed on the second operation/display user interface 16 are called a second operator, a second operation, and second information, respectively, as required.

The second operation/display user interface 16 may be, for example, a touch panel.

The first operation/display user interface 15 is disposed to the right of the deposit section 11. The second operation/display user interface 16 is disposed to the left of the deposit section 11. That is, the first operation/display user interface 15 and the second operation/display user interface 16 are disposed with the deposit section 11 arranged therebetween.

The first operation/display user interface 15 and the second operation/display user interface 16 may be disposed with the dispensing section 12 or the rejected banknote ejecting section 13 arranged therebetween. More specifically, the first operation/display user interface 15 may be disposed to the right of the dispensing section 12 or to the right of the rejected banknote ejecting section 13. The second operation/display user interface 16 may be disposed to the left of the dispensing section 12 or to the left of the rejected banknote ejecting section 13.

The external surface of the first operation/display user interface 15 is formed to be a curved surface convex to the outside of the banknote processing apparatus 1. The normal vector of the first area included in at least a part of the curved surface has an X-component that is positive, and a Y-component that is negative and/or a Z-component that is positive. In other words, the external surface of the first operation/display user interface 15 includes the first surface. The normal vector of the first surface has an X-component that is positive, and a Y-component that is negative and/or a Z-component that is positive. In still other words, at least the first surface of the curved surface is viewable from the right of the banknote processing apparatus 1, and viewable from the front side and/or upper side of the banknote processing apparatus 1. Consequently, the first operation/display user interface 15 is easily viewed and operated by the operator at the right of the banknote processing apparatus 1 and the operator at the front of the apparatus.

The external surface of the first operation/display user interface 15 may be a plane having a normal vector that has an X-component that is positive, and a Y-component that is negative and/or a Z-component that is positive. In other words, the external surface of the first operation/display user interface 15 is viewable from the right of the banknote processing apparatus 1, and viewable from the front side and/or upper side of the banknote processing apparatus 1.

A mode may be implemented that improves the viewability from the right side and/or the front side and/or the upper side of the banknote processing apparatus 1 by disposing a lens and/or a prism-like member in the first operation/display user interface 15.

The external surface of the second operation/display user interface 16 is formed to be a curved surface convex to the outside of the banknote processing apparatus 1. The normal vector of the second area included in at least a part of the curved surface has an X-component that is negative, and a Y-component that is negative and/or a Z-component that is positive. In other words, the external surface of the second operation/display user interface 16 includes the second surface. The normal vector of the second surface has an X-component that is negative, and a Y-component that is negative and/or a Z-component that is positive. In still other words, at least the second surface of the curved surface is viewable from the left of the banknote processing apparatus 1, and viewable from the front side and/or upper side of the banknote processing apparatus 1. Consequently, the second operation/display user interface 16 is easily viewed and operated by the operator at the left of the banknote processing apparatus 1 and the operator at the front of the apparatus.

The external surface of the second operation/display user interface 16 may be a plane having a normal vector that has an X-component that is negative, and a Y-component that is negative and/or a Z-component that is positive. In other words, the external surface of the second operation/display user interface 16 is viewable from the left of the banknote processing apparatus 1, and viewable from the front side and/or upper side of the banknote processing apparatus 1.

A mode may be implemented that improves the viewability from the left side and/or the front side and/or the upper side of the banknote processing apparatus 1 by disposing a lens and/or a prism-like member in the second operation/display user interface 16.

The first operation/display user interface 15 and the second operation/display user interface 16 are provided at the positions described above, with the orientations described above. Consequently, it can be easily recognized that the display content of each operation/display user interface is dedicated to any of the operators.

The storage 20 includes multiple storage areas, not illustrated. Each storage area is connected to the medium transporter. Each storage area receives input banknotes from the medium transporter and stores the banknotes. Each storage area feeds the stored banknotes to the medium transporter, for the sake of dispensing the banknotes.

The banknote processing apparatus 1 having the configuration described above is not specifically limited. For example, the apparatus is shared by two operators at the right and left to the banknote processing apparatus 1. The operator (first operator) at the right to the banknote processing apparatus 1 operates the banknote processing apparatus 1 using the first operation/display user interface 15. The operator (second operator) at the left to the banknote processing apparatus 1 operates the banknote processing apparatus 1 using the second operation/display user interface 16.

As described above, the first operation/display user interface 15 and the second operation/display user interface 16 have the function as that of the occupying button. For example, any position on the first operation/display user interface 15 is touched in a state where the banknote processing apparatus 1 does not execute the banknote process and stands by for an input of a processing operation, a signal indicating that the first operation/display user interface 15 has been touched is transmitted from the first operation/display user interface 15 to the control section. Upon receipt of the signal, the control section brings the state of the banknote processing apparatus 1 to a state where an operation pertaining to the banknote process from the first operation/display user interface 15 is accepted but an operation pertaining to the banknote process from the second operation/display user interface 16 is not accepted. That is, the control section brings the banknote processing apparatus 1 into the state of being occupied by the first operator. This is also applicable vice versa.

Even in such a state, the control section can accept an operation through the second operation/display user interface 16 by the second operator, and display the state of the banknote processing apparatus 1 (second information) on the second operation/display user interface 16, in a range without affecting the process based on the operation by the first operator. This is also applicable vice versa.

The first operation/display user interface 15 can switch the display content according to the content of the first operation. For example, for execution of a banknote process including multiple steps, information on an operation to be performed next can be provided for the first operator by changing the display content. This is also applicable to the second operation/display user interface 16.

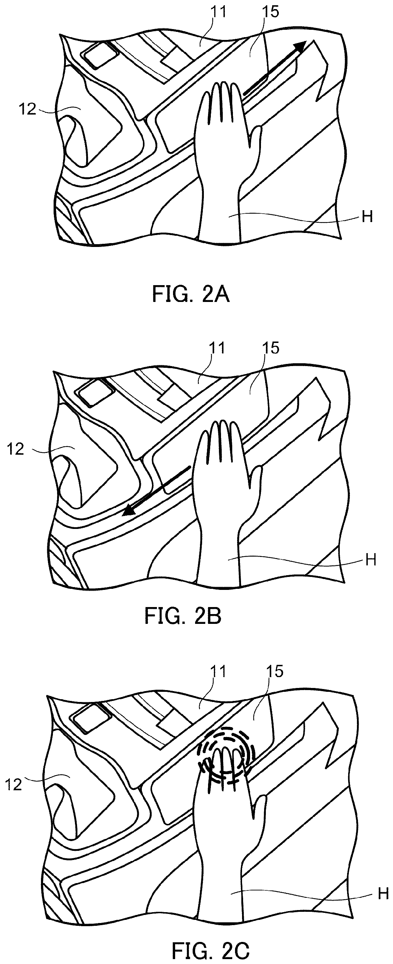

FIGS. 2A to 2C are perspective views of a part of the front side of the banknote processing apparatus 1 viewed from the upper right side, and illustrate the operation modes of the banknote processing apparatus 1 through the first operation/display user interface 15. The banknote processing apparatus 1 illustrated in FIGS. 2A to 2C is in a state of being occupied by the first operator operating the first operation/display user interface 15.

FIG. 2A illustrates the operation mode where the first operator touches the surface of the first operation/display user interface 15 with his or her hand H and moves the hand H from the front to the back as indicated by an arrow (i.e., swipe). In a case where such an operation is assumed as an operation for an instruction for a banknote deposit process, the direction of movement of the hand H substantially coincides with the direction in which the banknote is taken through the deposit section 11 into the banknote processing apparatus 1 and is transported. More specifically, in proximity to the deposit section 11, the direction in which the medium transporter transports the banknote and the direction in which the hand H is moved coincide with each other in that these directions have positive Y-components.

Consequently, for the first operator, the direction assumed as the direction in which the banknote is to be transported during the deposit process can substantially coincide with the direction in which the hand H is actually moved. Consequently, the first operator can easily and intuitively perform an operation for causing the banknote processing apparatus 1 to perform the deposit process.

FIG. 2B illustrates the operation mode where the first operator touches the surface of the first operation/display user interface 15 with his or her hand H and moves the hand H from the back to the front as indicated by an arrow (i.e., swipe). In a case where such an operation is assumed as an operation for an instruction for a banknote dispensation process, the direction of movement of the hand H substantially coincides with the direction in which the banknote is conveyed toward the dispensing section 12 in the banknote processing apparatus 1. More specifically, in proximity to the dispensing section 12, the direction in which the medium transporter transports the banknote and the direction in which the hand H is moved coincide with each other in that these directions have negative Y-components.

Consequently, for the first operator, the direction assumed as the direction in which the banknote is to be transported during the dispensation process can substantially coincide with the direction in which the hand H is actually moved. Consequently, the first operator can easily and intuitively perform an operation for causing the banknote processing apparatus 1 to perform the dispensation process.

FIG. 2C illustrates the operation mode where the first operator touches the first operation/display user interface 15 with his or her hand H multiple times (for example, three times). In a case where such an operation is assumed as an operation for an instruction for a reconciliation process for example, the first operator can easily perform an operation for causing the banknote processing apparatus 1 to perform the reconciliation process. The reconciliation process is a process of temporarily storing all the banknotes stored in the storage areas into a vacant storage area or the like, and subsequently feeding the banknotes from this storage area, recognizing the banknotes through the recognition unit, and returning the banknotes to the multiple storage areas, for the sake of confirming the denominations and the numbers of banknotes stored in the multiple storage areas.

The operation illustrated in FIG. 2C may be an operation for emergency notification, for example. For example, in case a burglar enters an office of a bank or the like where the banknote processing apparatus 1 is installed, this operation can quickly notify the police without awareness by the burglar. It is a matter of course that the operation for emergency notification may be any operation only if the operation is a certain predefined operation. For example, the operation may be an operation of sliding a finger on the first operation/display user interface 15 so as to trace letters "SOS" with the fingertip.

Although the first operation/display user interface 15 is the single operation unit as described above, this unit can accept various types of operations.

The various types of operations described above may be performed by the second operator through the second operation/display user interface 16 in a case where the banknote processing apparatus 1 is occupied by the second operator.

The operation through the first operation/display user interface 15 or the second operation/display user interface 16 is only required to include an operation by movement of a part of the body of the operator operating each operation/display user interface. For example, a part that touches the operation/display user interfaces made up of touch panels may be a part other than the hand H, such as an elbow of the operator. The operation through the first operation/display user interface 15 or the second operation/display user interface 16 may include an operation where a part of the body is moved to approach the touch panel. In this case, even if the operator wears what is made of material having poor conductivity, such as a glove or a finger cot made of rubber, each operation/display user interface can securely accept the operation.

Each operation/display user interface may include a sensor that includes, for example, an image pick-up element, an ultrasonic transceiver or the like. The sensor may detect the movement of a part of the body of the operator, such as the change in the attitude of the neck or the movement of the visual line. That is, the operation through the first operation/display user interface 15 or the second operation/display user interface 16 may be movement of a part of the body of the operator accepted as an operation pertaining to a banknote process.

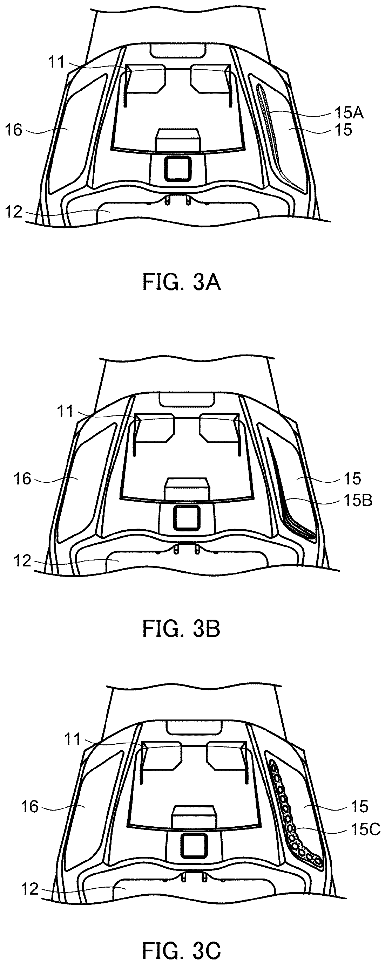

FIGS. 3A to 3C are perspective views of a part of the upper side of the banknote processing apparatus 1 viewed from the front side, and illustrate the display modes of the first information on the first operation/display user interface 15. The banknote processing apparatus 1 illustrated in FIGS. 3A to 3C is in the state of being occupied by the first operator operating the first operation/display user interface 15.

FIG. 3A illustrates a situation where a light strip 15A is displayed on a part of the first operation/display user interface 15. The light strip 15A moves from the right to the left (from the outside toward the center) around the front end of the first operation/display user interface 15, and subsequently moves from the front to the back around the left end of the first operation/display user interface 15. The light strip 15A is repetitively displayed, as required.

In a case where such a light strip 15A is displayed on the first operation/display user interface 15 during execution of the banknote deposit process, the direction of movement of the light strip 15A over at least a part of the movement path substantially coincides with a direction in which the banknote is taken into the banknote processing apparatus 1 by the deposit section 11 and is transported. More specifically, in proximity to the deposit section 11, the direction in which the medium transporter transports the banknote and the direction in which the light strip 15A finally moves coincide with each other in that these directions have positive Y-components.

Consequently, for the first operator, the direction assumed as the direction in which the banknote is to be transported during the deposit process can substantially coincide with the direction in which the light strip 15A is moved. Consequently, the first operator can intuitively recognize that the currently performed process is the deposit process, by directly viewing the light strip 15A.

Furthermore, in response to the operation illustrated in FIG. 2A, the banknote processing apparatus 1 executes the deposit process, and the first operation/display user interface 15 displays such a light strip 15A, thereby allowing the first operator to be provided with an intuitive and effective operation experience. An unprecedented graphical display is provided, which can improve the commercial value of the banknote processing apparatus 1.

The first operation/display user interface 15 may display information on the count result of input banknotes or the like, at the same time of or after display of the light strip 15A. The count result may be the total amount of input banknotes, the number of input banknotes of each type, such as the number for each denomination or fit or unfit notes. Alternatively, a mode may be adopted where these items are collectively displayed.

FIG. 3B illustrates a situation where a light strip 15B is displayed on a part of the first operation/display user interface 15. The light strip 15B moves from the back to the front of the first operation/display user interface 15, and subsequently moves from the left to the right (from the center toward the outside) around the front end of the first operation/display user interface 15. The light strip 15B is repetitively displayed, as required.

In a case where such a light strip 15B is displayed on the first operation/display user interface 15 during execution of the banknote dispensation process, the direction of movement of the light strip 15B over at least a part of the movement path substantially coincides with a direction in which the banknote is transported toward the dispensing section 12 in the banknote processing apparatus 1. More specifically, in proximity to the dispensing section 12, the direction in which the medium transporter transports the banknote and the direction in which the light strip 15B first moves coincide with each other in that these directions have negative Y-components.

Consequently, for the first operator, the direction assumed as the direction in which the banknote is to be transported during the dispensation process can substantially coincide with the direction in which the light strip 15B is moved. Consequently, the first operator can intuitively recognize that the currently performed process is the dispensation process, by directly viewing the light strip 15B.

Furthermore, in response to the operation illustrated in FIG. 2B, the banknote processing apparatus 1 executes the dispensation process, and the first operation/display user interface 15 displays such a light strip 15B, thereby allowing the first operator to be provided with an intuitive and effective operation experience. An unprecedented graphical display is provided, which can improve the commercial value of the banknote processing apparatus 1.

The first operation/display user interface 15 may display information on the count result of dispensed banknotes or the like, at the same time of or after display of the light strip 15B.

FIG. 3C illustrates a situation where a light strip 15C is displayed on a part of the first operation/display user interface 15. The light strip 15C extends from the proximity to the front end and proximity to the right end of the first operation/display user interface 15, via the proximity to the front end and the proximity to the left end, to the proximity to the back end and the proximity to the left end.

Lighting of the light strip 15C can indicate that the banknote processing apparatus 1 is in a certain state. Blinking of the light strip 15C can indicate that the banknote processing apparatus 1 is in another state. Changing the color of the light strip 15C can indicate that the banknote processing apparatus 1 is in still another state.

For example, lighting a green light strip 15C can display information indicating that the banknote processing apparatus 1 is in execution of the reconciliation process. Blinking of the green light strip 15C can display information indicating that the rejected banknote has been ejected to the rejected banknote ejecting section 13. Blinking of a red light strip 15C can display information indicating that a problem occurs in the state of hardware of the banknote processing apparatus 1, for example, a banknote is jammed at a certain place.

The first operation/display user interface 15 may display information on the count result of banknotes counted by the reconciliation process, or the like, at the same time of or after display of the light strip 15C.

The display modes illustrated in FIGS. 3A to 3C are only examples of the display modes of the first information. For example, the first information may include text. In this case, the first operation/display user interface 15 displays, as text, the content or state of the process executed by the banknote processing apparatus 1 in a manner "depositing" or "ejecting rejected banknote".

The first operation/display user interface 15 can display various pieces of information pertaining to the state of the banknote processing apparatus 1. The first operation/display user interface 15 can display that the banknote processing apparatus 1 is in a state of accepting a touch operation on the first operation/display user interface 15 for occupying this apparatus, that is, information indicating that the banknote processing apparatus 1 is in a non-occupied state, for example, using text or the like. The first operation/display user interface 15 can display, as text or a graph, information pertaining to the banknotes stored in the storage area by the banknote processing apparatus 1, for example, the number of notes of each denomination or the total amount (inventory amount). The first operation/display user interface 15 can display information pertaining to the state of the hardware of the banknote processing apparatus 1, for example, the situation of occurrence of a failure, such as banknote jam, or information indicating that the maintenance time is coming, using text, drawings or the like.

The above description of display of the first information on the first operation/display user interface 15 is also applicable to display of the second information on the second operation/display user interface 16.

As apparent from the above description, the first operation/display user interface 15 can accept the first operation and display information pertaining to the process executed according to the first operation while the banknote processing apparatus 1 is occupied by the first operator operating the first operation/display user interface 15. The second operation/display user interface 16 can accept the second operation and display information pertaining to the process executed according to this operation while the banknote processing apparatus 1 is occupied by the second operator operating the second operation/display user interface 16.

However, the functions of the first operation/display user interface 15 and the second operation/display user interface 16 are not limited to those described above. That is, the first operation/display user interface 15 may perform at least one of acceptance of the first operation and display of the information pertaining to the banknote processing apparatus 1 while the banknote processing apparatus 1 is occupied by the second operator. The second operation/display user interface 16 may perform at least one of acceptance of the second operation and display of the information pertaining to the banknote processing apparatus 1 while the banknote processing apparatus 1 is occupied by the first operator. That is, the operation through the first operation/display user interface 15 by the first operator, and the operation through the second operation/display user interface 16 by the second operator may be performed at the same time by the two operators.

For example, the first operation/display user interface 15 may preliminarily accept the operation pertaining to the process that the first operator intends to cause the banknote processing apparatus 1 to execute after completion of occupation by the second operator, while the banknote processing apparatus 1 is occupied by the second operator. That is, the first operation/display user interface 15 may accept a reservation operation by the first operator. This is also applicable to the second operation/display user interface 16. This configuration can allow the two operators to share the single banknote processing apparatus 1 more efficiently without causing useless time.

The first operation/display user interface 15 may display information pertaining to the process reserved by the first operator, while the banknote processing apparatus 1 is occupied by the second operator. The first operation/display user interface 15 may display information pertaining to the process indicated through the second operation/display user interface 16 by the second operator, while the banknote processing apparatus 1 is occupied by the second operator. Such information include, for example, the content of the process under execution, remaining time until completion of the process under execution, and the like. The first operation/display user interface 15 displays these pieces of information, thereby allowing the first operator to prepare the banknote process efficiently. Display pertaining to the remaining time until completion of the process under execution to be displayed here is not necessarily correct time, such as several seconds remaining, but may be remaining steps in the process or display of information roughly indicating the remaining time, such as a progression rate.

The opening section may include a light emitting section that emits light in conjunction with the display content on at least one of the first operation/display user interface 15 and the second operation/display user interface 16. For example, the rejected banknote ejecting section 13 may include an LED that turns on when information indicating that the rejected banknote has been ejected is displayed on the first operation/display user interface 15 or the second operation/display user interface 16. Such a light emitting section allows the occupying user to recognize more securely that the rejected banknote has been ejected in the rejected banknote ejecting section 13 while allowing the non-occupying user to recognize this fact. Consequently, the rejected banknote is more securely prevented from being left.

The light emitting section may blink in synchronization with blinking of the light strip 15C illustrated in FIG. 3C, for example. The light emitting section may be provided in the rejected banknote stopper 14, or provided in a frame encircling the opening formed at the rejected banknote ejecting section 13.

The light emitting section may be provided at the deposit section 11, for example, in a frame encircling the opening at the deposit section 11, and be turned on or blink in conjunction with display indicating that the deposit process is in execution on the first operation/display user interface 15 or the second operation/display user interface 16. The light emitting section may be provided at the dispensing section 12, for example, in a frame encircling the opening at the dispensing section 12, and be turned on or blink in conjunction with display indicating that the dispensation process is in execution on the first operation/display user interface 15 or the second operation/display user interface 16.

The banknote processing apparatus 1 may be connected via a network to an external terminal that accepts a reservation for the banknote process. For example, the external terminal is a terminal that is installed around an entrance of a store, such as a bank, and is operated by a customer or the like in the store. When the customer operates the external terminal, information pertaining to the banknote process, such as the deposit process, the customer wishes to request the store to perform, that is, the reservation information is transmitted from the external terminal to the banknote processing apparatus 1.

The banknote processing apparatus 1 includes a receiving section, not illustrated, receiving the reservation information. When the receiving section accepts the reservation information, the control section causes the first operation/display user interface 15 or the second operation/display user interface 16 to display the reservation information on the basis of the operation state of the banknote processing apparatus 1 at the time. For example, in a case where the receiving section receives the reservation information while the banknote processing apparatus 1 executes the process accepted by the second operation/display user interface 16, the control section causes the first operation/display user interface 15 to display the reservation information.

Consequently, the first operator can preliminarily recognize a process to be processed next, and prepares the process. Consequently, minimization of the time of keeping the customer waiting can be facilitated. After completion of a certain banknote process, the next banknote process can be subsequently performed. That is, improvement in efficiency of the banknote process can be facilitated.

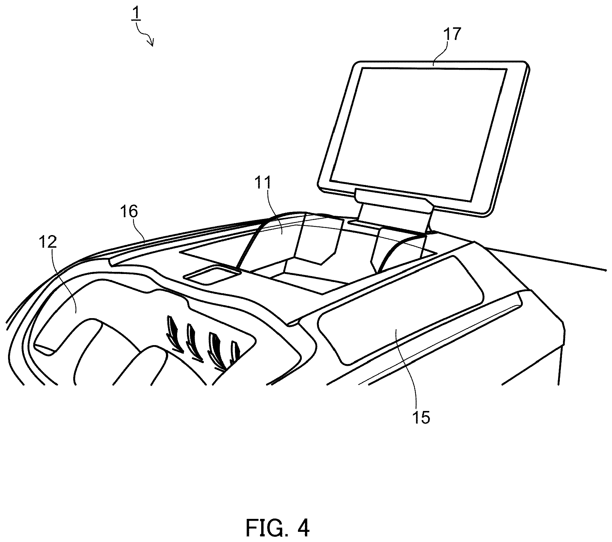

FIG. 4 is a perspective view of a part of an upper part of a banknote processing apparatus 1 according to another embodiment viewed from the upper, front and right sides. The banknote processing apparatus 1 illustrated in FIG. 4 is different from the banknote processing apparatus 1 illustrated in FIG. 1 only in that a third operation/display user interface 17 is included.

The third operation/display user interface 17 accepts an operation pertaining to the banknote process from a third operator different from the first operator and the second operator, and displays third information that is information pertaining to the state of the banknote processing apparatus 1. The third operator is an operator that is at the front side of the banknote processing apparatus 1, or a manager that does not directly perform the operation in usual cases.

The third operation/display user interface 17 is provided at the upper side of the banknote processing apparatus 1 and at the back of the deposit section 11. In the case where the banknote processing apparatus 1 includes such a third operation/display user interface 17, the third operator can operate the banknote processing apparatus 1 without stopping the operation of the person (the first operator or the second operator) occupying the banknote processing apparatus 1. For example, process history information on the banknote processing apparatus 1 can be referred to, and the inventory amount can be confirmed.

Also in the middle of the third operator's operation of the third operation/display user interface 17, the first operation/display user interface 15 and the second operation/display user interface 16 can function in a manner analogous to that of the first operation/display user interface 15 and the second operation/display user interface 16 included in the banknote processing apparatus 1 according to the previous embodiment.

According to the banknote processing apparatus 1 of this embodiment, for example, the third operator can support the customer without affecting the operations of the first operator and the second operator, in a case where the process history of the banknote processing apparatus 1 is required to be referred to, such as a case where a trouble with a customer occurs.

The specific embodiments of the medium processing apparatus according to the present invention have thus been described. It is a matter of course that the present invention is not limited to these embodiments. For example, the languages displayed on the multiple operation/display user interfaces may be different from each other. Accordingly, in a case where multiple operators whose native languages are different from each other share the banknote processing apparatus 1, information can be displayed on the operation/display user interfaces in the respective languages the operators are good at.

A media to be processed by the medium processing apparatus is not limited to the banknote, and may be, for example, another sheet, such as a check or a coupon, or what is not in a sheet form, i.e., a coin.

### Industrial Applicability

The present invention is preferably used as a medium processing apparatus that processes media, such as banknotes and coins.

### Reference Signs List

1 Banknote processing apparatus
10 Processing section
11 Deposit section
12 Dispensing section
13 Rejected banknote ejecting section
14 Rejected banknote stopper
15 First operation/display user interface
15A, 15B, 15C Light strip
16 Second operation/display user interface
17 Third operation/display user interface
20 Storage
H Hand

## Claims

1. A medium processing apparatus (1) that executes a plurality of processes for a medium, the apparatus comprising:
a first operation/display user interface (15) that accepts a first operation pertaining to a first process of the plurality of processes, and displays first information pertaining to a state of the medium processing apparatus; and
a second operation/display user interface (16) that accepts a second operation pertaining to a second process of the plurality of processes, and displays second information pertaining to the state of the medium processing apparatus.

2. The medium processing apparatus according to claim 1,
wherein while the second operation/display user interface accepts the second operation or while the second process is executed according to the second operation, the first operation/display user interface performs at least one of acceptance of the first operation and display of the first information, and
while the first operation/display user interface accepts the first operation or while the first process is executed according to the first operation, the second operation/display user interface performs at least one of acceptance of the second operation and display of the second information.

3. The medium processing apparatus according to claim 1 or 2,
wherein the first information includes information pertaining to the first operation, and
the second information includes information pertaining to the second operation.

4. The medium processing apparatus according to any one of claims 1 to 3,
wherein the first information and the second information include information pertaining to content of the first process and the second process, respectively.

5. The medium processing apparatus according to claim 4,
wherein the first information includes information pertaining to content of the first process to be executed according to the first operation, and
the second information includes information pertaining to content of the second process to be executed according to the second operation.

6. The medium processing apparatus according to any one of claims 1 to 5, further comprising:
an opening section (11, 12, 13) where at least one of inputting and ejecting of the medium is performed; and
a medium transporter that is connected to the opening section, and is operable to transport the medium input in a first predetermined direction and is operable to transport the medium to be ejected in a second predetermined direction.

7. The medium processing apparatus according to claim 6,
wherein the first operation and the second operation each include an operation through movement of at least a part of a body of an operator in a direction substantially along the first predetermined direction and the second predetermined direction, respectively.

8. The medium processing apparatus according to claim 6 or 7,
wherein the first information includes an indication of a direction substantially along the first predetermined direction, and
the second information includes an indication of another direction substantially along the second predetermined direction.

9. The medium processing apparatus according to any one of claims 6 to 8,
wherein the opening section includes a light emitting section emitting light in conjunction with display content on at least one of the first operation/display user interface and the second operation/display user interface.

10. The medium processing apparatus according to any one of claims 6 to 9,
wherein the first operation/display user interface is disposed in a first zone adjacent to a vertical plane parallel to the first and second predetermined directions and includes a center of the opening section, the second operation/display user interface is disposed in a second zone adjacent to the vertical plane, and the first operation/display user interface and the second operation/display user interface are disposed with the opening section arranged therebetween.

11. The medium processing apparatus according to claim 10,
wherein on a horizontal plane in a right-handed orthogonal coordinate system made up of an X axis that is orthogonal to the vertical plane and has the positive direction of the X axis from the second zone toward the first zone, a horizontal Y axis orthogonal to the X axis, and a vertical Z axis orthogonal to the X axis and the Y axis,
a normal vector of a first area included in at least a part of the first operation/display user interface has an X-component that is positive, and at least a Y-component that is negative or a Z-component that is positive, and
a normal vector of a second area included in at least a part of the second operation/display user interface has an X-component that is negative, and at least a Y-component that is negative or a Z-component that is positive.

12. The medium processing apparatus according to claim 11,
wherein a shape of the first area and a shape of the second area each comprise curved surfaces.

13. The medium processing apparatus according to any one of claims 1 to 12, further comprising
a third operation/display user interface (17) that accepts a third operation pertaining to a third process of the plurality of processes, and displays third information pertaining to the state of the medium processing apparatus.

14. The medium processing apparatus according to any one of claims 1 to 13, wherein the first process and the second process are different processes of the plurality of processes.

15. The medium processing apparatus according to any one of claims 1 to 13, wherein the first process and the second process are a same process, wherein the first process is for a first operator and the second process is for a second operator.
